(19) Europäisches Patentamt
European Patent Office
Office européen des brevets

(11) Veröffentlichungsnummer : **0 014 764**
**B1**

(12) # EUROPÄISCHE PATENTSCHRIFT

(45) Veröffentlichungstag der Patentschrift : **11.11.81**

(51) Int. Cl.³ : **C 08 J 9/20**, C 08 K 5/01, C 08 L 25/04

(21) Anmeldenummer : **79105237.6**

(22) Anmeldetag : **18.12.79**

(54) **Selbstverlöschende feinteilige expandierbare Styrolpolymerisate.**

(30) Priorität : **19.02.79 DE 2906336**

(43) Veröffentlichungstag der Anmeldung : **03.09.80 (Patentblatt 80/18)**

(45) Bekanntmachung des Hinweises auf die Patenterteilung : **11.11.81 Patentblatt 81/45**

(84) Benannte Vertragsstaaten : **AT BE FR GB IT NL SE**

(56) Entgegenhaltungen :
**DE - A - 2 338 709**
**DE - B - 1 244 395**
**DE - B - 1 255 302**
**DE - B - 1 270 803**
**DE - B - 1 273 187**

(73) Patentinhaber : **CHEMISCHE WERKE HLS AG**
**Postfach 1320**
**D-4370 Marl 1 (DE)**

(72) Erfinder : **Rigler, Josef Karl, Dr.**
**Helgolandstrasse 16**
**D-4350 Recklinghausen (DE)**
Erfinder : **Ratajczak, Hans-Josef, Dr.**
**Gersthofener Strasse 14**
**D-4370 Marl (DE)**
Erfinder : **Leithäuser, Horst, Dr.**
**Langehegge 151**
**D-4370 Marl (DE)**
Erfinder : **Trukenbrod, Karl, Dr.**
**Leunaer Strasse 32**
**D-4370 Marl (DE)**

**EP 0 014 764 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Selbstverlöschende feinteilige expandierbare Styrolpolymerisate

Es ist bekannt, halogenhaltige Stoffe, insbesondere organische Bromverbindungen, als Flammschutzmittel für selbstverlöschende thermoplastische Polymerisate zu verwenden. Um eine ausreichende Wirkung zu erzielen, müssen verhältnismäßig große Mengen der Halogenverbindungen zugesetzt werden. Dadurch werden aber die Verarbeitungseigenschaften besonders bei expandierbaren Polymerisaten nachteilig beeinflußt.

Es ist außerdem bekannt, daß die Menge an Halogenverbindung bei gleicher Wirkung durch Zusatz synergistisch wirkender Stoffe stark gesenkt werden kann. Insbesondere sind als derartige Synergisten bekannt: organische Peroxidverbindungen (DE-PS 12 73 187) oder Diazoverbindungen (DE-OSS 23 20 535 und 23 53 438). Sowohl Peroxide wie auch Diazoverbindungen haben aber den Nachteil, daß sie ebenso wie ihre Zersetzungsprodukte in den erforderlichen hohen Konzentrationen stark toxisch sind und sich mitunter explosionsartig zersetzen.

Die Verwendung von Polymeren und Oligomeren des p-Diisopropylbenzols als Synergisten für bromhaltige Flammschutzmittel (DE-PS 12 55 302, FR-PS 14 57 547, BE-PS 704 666) hat den Nachteil, daß sie in Styrol unlöslich sind und zudem in festem Aggregatzustand vorliegen, so daß sie schwierig in die expandierbaren Styrolpolymerisate eingebracht werden können. Außerdem sind für eine ausreichend gute Wirkung Konzentrationen von mehr als 1 Gew.-% erforderlich.

Der Einsatz von N-Nitrosoverbindungen (US-PS 3 274 133), Triphenylphosphinoxid (FR-PS 14 10 556) oder Tetraphenylhydrazin (FR-PS 12 45 593) verbietet sich in der Praxis, weil diese Stoffe oder ihre Zersetzungsprodukte ebenfalls toxisch sind.

Der Erfindung lag also die Aufgabe zugrunde, Stoffe bereitzustellen, welche Nachteile des Standes der Technik nicht aufweisen.

Gegenstand der Erfindung sind feinteilige selbstverlöschende expandierbare Styrolpolymerisate zur Herstellung von Formkörpern, die organische Halogenverbindungen als Flammschutzmittel und einen Synergisten enthalten, wobei sie als Synergisten 0,1 bis 3 Gew.-%, bezogen auf das Styrolpolymerisat, mindestens einen Kohlenwasserstoff enthalten, der bei Temperaturen oberhalb 300 °C stabile Radikale bildet.

Geeignete Kohlenwasserstoffe sind Dibenzylbenzole der allgemeinen Formel

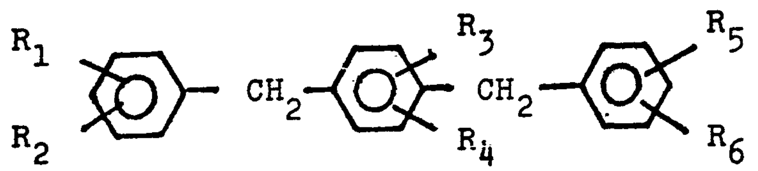

in denen die Reste $R_1$ bis $R_6$ Wasserstoff- oder Halogenatome, Alkyl- Cycloalkyl- oder Arylreste darstellen, soweit sie oberhalb 300 °C stabile Radikale bilden. Die Dibenzylbenzole können z.B. nach dem in der deutschen Patentschrift 10 85 877 beschriebenen Verfahren erhalten werden. Sie stellen im allgemeinen Isomerengemische dar, die in dieser Form eingesetzt werden können. Ferner geeignet ist Benzyltoluol, auch in Form seines Isomerengemisches und, insbesondere 1-Phenyl-1,3,3-trimethylindan, das besonders leicht zugänglich ist nach einem Vorschlag durch katalytische Dimerisierung von α-Methylstyrol. Allgemein ausgedrückt enthalten die eingesetzten Kohlenwasserstoffe demnach mindestens einen aromatischen Rest.

Die synergistische Wirkung der Kohlenwasserstoffe kann verbessert werden, wenn zusätzlich 0,01 bis 0,08 Gew.-%, bezogen auf die Styrolpolymerisate, organische Peroxide verwendet werden mit einer Halbwertszeit ihres Zerfalls von mehr als zwei Stunden bei 100 °C. Derartige Peroxide sind z.B. Di-tert.-butylperoxid, Dicumylperoxid, Di-tert.-amylperoxid oder 3,3,6,6,9,9-Hexamethyl-1,2,4,5-tetraoxacyclononan, wobei Dicumylperoxid besonders bevorzugt ist.

Besonders vorteilhaft ist, wenn die Kohlenwasserstoffe in Mengen von 0,4 bis 1 Gew.-% und die Peroxide in Mengen von 0,04 bis 0,06 Gew.-%, jeweils bezogen auf das Styrolpolymerisat, enthalten sind.

Die Peroxide können demnach in sehr geringen Mengen eingesetzt werden, in denen sie allein keine synergistische Wirkung zeigen, womit die bekannten Nachteile ihres Einsatzes vermieden werden.

Sowohl der Kohlenwasserstoff als auch die Peroxide sind in monomerem Styrol löslich und Zersetzen sich unter den üblichen Polymerisationsbedingungen nicht. Damit ist eine homogene Verteilung im Endprodukt gewährleistet. Deshalb wird man sie auch vorteilhaft vor oder zu Beginn der Polymerisation zusetzen. Durch den Einsatz der wohlfeilen Kohlenwasserstoffe wird zudem noch erreicht, daß die synergistische Wirkung auch bei längerem Lagern bei höheren Temperaturen nicht verloren geht.

Als Styrolpolymerisate kommen Polystyrol und Mischpolymerisate des Styrols mit bis zu 50 % Comonomeren in Frage.

Als Comonomere können z.B. α-Methylstyrol, Acrylnitril sowie Ester der Acrylsäure oder Methacrylsäure von Alkoholen mit 1 bis 8 Kohlenstoffatomen eingesetzt werden.

Die Styrolpolymerisate enthalten in homogener Verteilung ein oder mehrere Treibmittel. Als Treibmittel eignen sich z.B. unter Normalbedingungen gasförmige oder flüssige Kohlenwasserstoffe oder Halogenkohlenwasserstoffe, die das Styrolpolymerisat nicht lösen und deren Siedepunkte unter dem Erweichungspunkt des Polymerisates liegen. Geeignete Treibmittel sind z.B. Propan, Butan, Pentan, Cyclopentan, Hewan, Cyclohexan oder Halogenkohlenwasserstoffe, wie Dichlordifluormethan, Methylenchlorid. Auch Mischungen von Treibmitteln können in den Massen enthalten sein. Die Treibmittel sind in den Styrolpolymerisaten im allgemeinen in Mengen von 3 und 15, insbesondere von 5 bis 8 Gew.-%, bezogen auf das Styrolpolymerisat, enthalten.

Die organischen Halogenverbindungen, insbesondere Bromverbindungen, sollen vorzugsweise mindestens 4 Kohlenstoffatome enthalten. Besonders geeignet sind schwer-flüchtige Verbindungen, die nicht oder nur in geringem Maß als Weichmacher wirken und keinen störenden Geruch haben, wie z.B. 1,2,5,6,9,10-Hexabromocyclododecan, Ethoxitetrabromoctan, Tribrom-trichlorcyclohexan, Pentabrommonochlorcyclohexan. Eine Aufzählung geeigneter Bromverbindungen findet sich in Kunststoff-Handbuch, Band V « Polystyrol » (1965), Seite 690 ff. Bromverbindungen sollen mehr als 40 Gew.-% Brom enthalten und werden in solchen Mengen verwendet, daß der Bromgehalt mindestens 0,1 und nicht mehr als 2 Gew.-%, bezogen auf das Styrolpolymerisat, beträgt. Vorzugsweise beträgt dieser Bromgehalt 0,4 bis 1 Gew.-%.

Das Polymerisat kann außerdem Zusatzstoffe, wie Weichmacher, Stabilisatoren, Farbstoffe, Füllstoffe, enthalten. Weiter können die expandierbaren Polystyrole in bekannter Weise an der Oberfläche beschichtet sein, u.zw. mit Substanzen gegen Verklumpung beim Vorschäumen oder gegen statische Aufladung.

Die expandierbaren Styrolpolymerisate werden durch Polymerisation in Gegenwart organischer Polymerisationsinitiatoren erhalten, die unter Einfluß von Wärme in polymerisationsauslösende Radikale zerfallen. Gebräuchlich sind z.B. Peroxide, wie Benzoylperoxid, Laurylperoxid oder tert.-butylperbenzoat, tert.-butylperoctoat oder Mischungen derselben sowie instabile Azoverbindungen, wie Azobisisobutyronitril. Die Initiatoren werden im allgemeinen in Mengen von 0,01 bis 1 Gew.-%, bezogen auf die Monomeren, eingesetzt.

Die Art des zu verwendenden Initiators richtet sich nach der vorgesehenen Polymerisationstemperatur. Es ist vorteilhaft, Mischungen von Initiatoren zu verwenden, wobei die Polymerisationstemperatur auf die entsprechende Halbwertszeit des Initiators abgestimmt worden kann. Die Polymerisationstemperatur liegt in der Regel zwischen 60 und 150 °C, vorzugsweise zwischen 80 und 120 °C.

Die expandierbaren Styrolpolymerisate können in Perlform oder in beliebiger anderer Form vorliegen, wobei die Teilchen vorteilhaft Durchmesser von 0,3 bis 3 mm aufweisen.

Die aus den Styrolpolymerisaten hergestellten selbstverlöschenden Formkörper werden auf folgende Weise geprüft:

Ein Prüfkörper mit den Abmessungen 30 × 30 × 120 mm wird senkrecht in eine Halterung eingespannt und 5 Sekunden lang mit einer nicht leuchtenden Bunsenbrennerflamme von 40 mm Flammenhöhe zum Brennen gebracht. Anschließend wird die Flamme mit ruhiger Bewegung entfernt. Die Verlöschzeit des Formkörpers nach Entfernen aus der Flamme ist ein Maß für dessen Flammwidrigkeit. Ungenügend oder gar nicht schwer entflammbar ausgerüstete Formmassen brennen nach Entfernen aus der Flamme vollständig ab.

## Beispiele

In einem druckfesten Rührkessel aus korrosionsfreiem Stahl wurde jeweils eine Mischung aus 100 Gewichtsteilen VE-Wasser, 100 Gewichtsteilen Styrol, 0,4 Gewichtsteilen Benzoylperoxid, 0,1 Gewichtsteil tert. Butylperbenzoat sowie den in der Tabelle 1 genannten Zusätzen a-n in den dort angegebenen Mengen unter Rühren auf 90 °C erhitzt. Nach 2 Stunden bei 90 °C 5 Gewichtsteile einer 2 %igen wäßrigen Lösung von Polyvinylalkohol zugegeben. Nach weiteren 2 Stunden bei 90 °C erfolgte die Zugabe von 7 Gewichtsteilen Pentan. Der Ansatz wurde nach einer weiteren Stunde bei 90 °C auf 120 °C aufgeheizt und 6 Stunden bei dieser Temperatur gehalten.

Nach Beendigung des Polymerisationscyklus wurde abgekühlt, das entstandene Perlpolymerisat von der wäßrigen Phase abgetrennt, getrocknet und gesiebt.

Die Perlen wurden in einem kontinuierlichen Rührvorschäumer Typ Rauscher mit strömendem Wasserdampf auf ein Schüttgewicht von 15 g/l vorgeschäumt, 24 Stunden zwischengelagert und anschließend in einer 500 l Blockform Typ Rauscher ausgeschäumt. Aus dem fertigen Block wurden je 5 Probekörper mit den Abmessungen 30 × 30 × 120 mm geschnitten und die Flammwidrigkeit wie oben angegeben bestimmt. Die Ergebnisse sind in Tabelle 1 zusammengestellt (Konzentrationsangaben in Gew.-%, bezogen auf Styrol).

(Siehe die Tabelle 1 Seite 4)

Tabelle 1

| Beispiel Nr. | Zusätze | | | | | | Auslöschzeit sec. |
|---|---|---|---|---|---|---|---|
| | Bromverbindung | | Synergisten | | | | |
| | | | Kohlenwasserstoff | | Peroxid | | |
| | Art | Menge Gew.-% | Art | Menge Gew.-% | Art | Menge Gew.-% | |
| a | HBCD | 1 | — | — | — | — | > 20 (1) |
| b | HBCD | 1 | — | — | DCP | 0,04 | > 20 (1) |
| c | HBCD | 1 | — | — | DHI | 0,3 | 10 |
| d | HBCD | 1 | — | — | DCP | 0,3 | 4 |
| e | HBCD | 0,75 | DBT | 0,6 | — | — | 10 |
| f | HBCD | 0,75 | DBT | 1,0 | — | — | 8 |
| g | HBCD | 0,75 | PMI | 0,6 | — | — | 10 |
| h | HBCD | 0,75 | MBT | 0,4 | DCP | 0,05 | 2 |
| i | HBCD | 0,75 | PMI | 0,4 | DCP | 0,04 | 1 |
| j | HBCD | 1,0 | DBT | 0,5 | DCP | 0,04 | 0,5 |
| k | HBCD | 1,0 | PMI | 0,4 | DCP | 0,04 | 0,5 |
| l | ETBO | 1,0 | PMI | 0,4 | DCP | 0,04 | 1 |
| m | ETBO | 1,0 | DBT | 0,5 | DCP | 0,04 | 2 |
| n | HBCD | 1,0 | MBT | 0,5 | DCP | 0,04 | 1 |

Nr. a bis d Vergleichsbeispiele, Nr. e bis n Erfindungsbeispiele;
DBT = Isomerengemisch Dibenzyltoluol
MBT = Isomerengemisch Benzyltoluol
PMI = 1-Phenyl-1,3,3-trimethylindan
DCP = Dicumylperoxid
HBCD = 1,2,5,6,9,10-Hexabromcyclododecan
ETBO = 1-Ethoxi-2,3,7,8-tetrabromoctan
DHI = Dehydrooligomer des Diisopropylbenzols
(1) = vollständig abgebrannt

**Ansprüche**

1. Feinteilige, selbstverlöschende expandierbare Styrolpolymerisate zur Herstellung von Formkörpern, Halogenverbindungen und einen Synergisten enthaltend, dadurch gekennzeichnet, daß sie als Synergist 0,1 bis 3 Gew.-%, bezogen auf Styrolpolymerisat, mindestens eines Kohlenwasserstoffs enthalten, der bei Temperaturen oberhalb 300 °C stabile Radikale bildet und zwar ausgewählt aus Dibenzylbenzolen der allgemeinen Formel

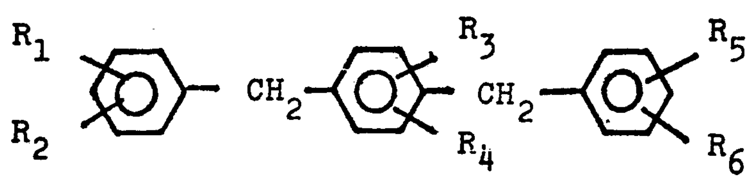

in denen die Reste $R_1$ bis $R_6$ Wasserstoff- oder Halogenatome, Alkyl- Cycloalkyl- oder Arylreste darstellen, soweit sie oberhalb 300 °C stabile Radikale bilden, Benzyltoluol und/oder 1-Phenyl-1,3,3-trimethyl-indan.

2. Feinteilige, selbstverlöschende expandierbare Styrolpolymerisate nach Anspruch 1, dadurch gekennzeichnet, daß sie zusätzlich 0,01 bis 0,08 Gew.-%, bezogen auf das Styrolpolymerisat, mindestens eines Peroxids mit einer Zerfalls-Halbwertszeit von mehr als zwei Stunden bei 100 °C enthalten.

3. Feinteilige, selbstverlöschende expandierbare Styrolpolymerisate nach Anspruch 2, dadurch gekennzeichnet, daß sie 0,4 bis 1 Gew.-% des Kohlenwasserstoffes und 0,04 bis 0,06 Gew.-% des Peroxids, jeweils bezogen auf das Styrolpolymerisat, enthalten.

4. Styrolpolymerisate nach Anspruch 3, dadurch gekennzeichnet, daß der Kohlenwasserstoff 1-Phenyl-1,3,3-tri-methylindan und das Peroxid Dicumylperoxid ist.

## Claims

1. A finely divided, self-extinguishing, expandable styrene polymer for the manufacture of mouldings, which contains a halogen compound and a synergist, characterised in that it contains as synergist from 0,1 to 3% by weight, based on the styrene polymer, of at least one hydrocarbon which at temperatures above 300 °C forms stable radicals and which is selected from benzyl toluene, 1-phenyl-1,3,3-trimethyl-indane and dibenzyl benzenes of the general formula

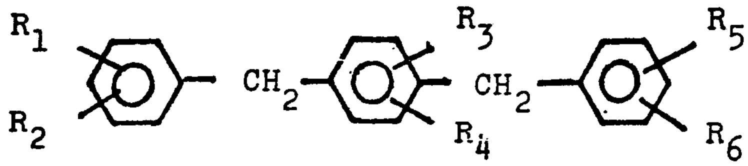

in which the radicals $R_1$ to $R_6$ are hydrogen or halogen atoms or alkyl, cycloalkyl or aryl groups in so far as these dibenzyl benzenes form stable radicals above 300 °C.

2. A finely divided, self-extinguishing, expandable styrene polymer according to claim 1, characterised in that it contains in addition from 0,01 to 0,08% by weight, based on the styrene polymer, of at least one peroxide having a half-life of more than two hours at 100 °C.

3. A finely divided, self-extinguishing, expandable styrene polymer according to claim 2, characterised in that it contains from 0,4 to 1% by weight of the hydrocarbon and from 0,04 to 0,06% by weight of the peroxide, each based on the styrene polymer.

4. A styrene polymer according to claim 3, characterised in that the hydrocarbon is 1-phenyl-1,3,3-trimethyl-indane and the peroxide is dicumyl peroxide.

## Revendications

1. Polymères de styrène finement divisés, auto-extincteurs et pouvant être expansés, pour la fabrication des pièces moulées, contenant des composés halogènes et un synergiste, caractérisés en ce qu'ils contiennent, comme synergiste, 0,1 à 3% en poids, par rapport au polymère de styrène, d'au moins un hydrocarbure qui aux températures au-dessus de 300 °C forme(nt) des radicaux stables, étant sélectionné(s) de toluène benzylique, de 1-phényle-1,3,3-triméthylindane et/ou de benzènes dibenzyliques de la formule générale

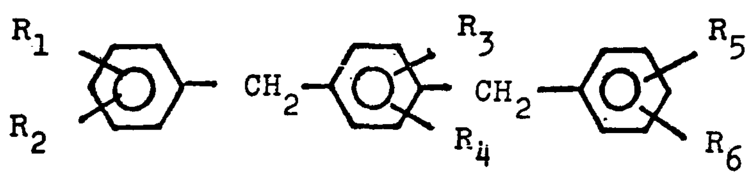

dans laquelle les résidus $R_1$ à $R_6$ constituent des atomes d'hydrogène ou d'halogène ou bien des groupes alkyliques, cyclo-alkyliques ou aryliques pour autant que ces benzènes dibenzyliques forment des radicaux stables au-dessus de 300 °C.

2. Polymères de styrène finement divisés, auto-extincteurs et pouvant être expansés, selon revendication 1, caractérisés en ce qu'il contiennent, en outre, 0,01 à 0,08% en poids, par rapport au polymère de styrène, d'au moins un peroxyde ayant un temps de désintégration à mi-hauteur de plus que deux heures à 100 °C.

3. Polymères de styrène finement divisés, auto-extincteurs et pouvant être expansés, selon revendication 2, caractérisés en ce qu'ils contiennent, par rapport au polymère de styrène, 0,4 à 1% en poids d'hydrocarbure et 0,04 à 0,06% en poids de peroxyde.

4. Polymères de styrène selon revendication 3, caractérisés en ce que l'hydrocarbure est du 1-phényle-1,3,3-triméthylindane et le peroxyde est du peroxyde dicumylique.